Europäisches Patentamt

European Patent Office

Office européen des brevets

(11) Veröffentlichungsnummer : **0 019 765**
**B1**

(12) # EUROPÄISCHE PATENTSCHRIFT

(45) Veröffentlichungstag der Patentschrift :
26.01.83

(51) Int. Cl.³ : **C 08 L 23/06, C 08 J 5/18,**
**C 08 K 5/13, C 08 K 5/52**

(21) Anmeldenummer : 80102510.7

(22) Anmeldetag : 08.05.80

(54) Verwendung einer speziellen Polyolefin-Formmasse zum Herstellen von Folien nach dem Folienblasverfahren.

(30) Priorität : 28.05.79 DE 2921616

(43) Veröffentlichungstag der Anmeldung :
10.12.80 Patentblatt 80/25

(45) Bekanntmachung des Hinweises auf die Patenterteilung : 26.01.83 Patentblatt 83/04

(84) Benannte Vertragsstaaten :
AT BE DE FR GB IT NL

(56) Entgegenhaltungen :
DE A 2 606 358
FR A 1 545 567
GB A 924 332
US A 2 825 721
US A 3 179 720
US A 3 988 395

(73) Patentinhaber : CIBA-GEIGY AG
Patentabteilung Postfach
CH-4002 Basel (CH)

(72) Erfinder : Cramer, Dieter
Werrystrasse 30
D-6715 Lambsheim (DE)
Erfinder : Weiss, Frank, Dr.
Boecklinstrasse 17
D-6800 Mannheim 1 (DE)
Erfinder : Glaser, Rudolf, Dr.
Don-Carlos-Strasse 9
D-6700 Ludwigshafen (DE)

EP 0 019 765 B1

Verwendung einer speziellen Polyolefin-Formmasse zum Herstellen von Folien nach dem Folienblasverfahren

Die vorliegende Erfindung liegt im Rahmen der Verwendung einer Formmasse aus

a) 100 Gewichtsteilen eines Polyäthylens, das
1.1) mittels eines Chrom enthaltenden Katalysators hergestellt ist,
1.2) eine Dichte von über 0,935 g/cm³ hat,
1.3) einen Schmelzindex (nach DIN 53 735 bei 190 °C/2,16 kg) von kleiner 0,7 g/10 min aufweist und
1.4) eine Lösungsviskosität (nach DIN 53 728/Blatt 4) von 1 bis 5 cm³/g besitzt,
b) 1 bis 30 Gewichtsteilen eines Polyäthylens, das
2.1) eine Dichte von 0,940 bis 0,968 g/cm³ hat und
2.2) einen Schmelzindex (nach DIN 53 735 bei 190 °C/2,16 kg) von 0,9 bis 20 g/10 min aufweist,
c) 0,05 bis 1 Gewichsteilen eines Tris-(2,4-dialkylphenyl)-phosphits, wobei die Alkylgruppen gleich oder verschieden sind und jeweils 1 bis 9 Kohlenstoffatome enthalten sowie
d) anderen Additiven,

zum Herstellen von 10 bis 500, insbesondere 10 bis 80 und vor allem 10 bis 30 μm dicken biaxial verstreckten Folien nach dem Folienblasverfahren mit einem Aufblasverhältnis bis zu 1 : 10 und insbesondere 1 : 2 bis 1 : 7.

Eine solche Verwendung derartiger Formmassen ist bekannt, z.B. aus der DE-A 27 25 676 ; die entsprechenden Folien sind qualitativ zufriedenstellend und haben sich in der Praxis eingeführt.

Aufgabenstellung zur vorliegenden Erfindung war es, eine Formmasse der vorstehend definierten Art aufzuzeigen, die sich zum Herstellen qualitativ weiter verbesserter — insbesondere hinsichtlich des Schmelzbruchs verbesserter — Folien, auch dünner und sehr dünner Folien, nach dem Folienblasverfahren eignet.

Wie sich ergeben hat, ist die Lösung dieser Aufgabe möglich mit Formmassen, die als ein weiteres Additiv (d) ein spezielles, phenolische Substituenten tragendes, Benzol enthalten. Es ist zwar aus der DE-A 2 606 358 bekannt, dieses Benzol als Antioxydans in Polyolefinstabilisatoren gemeinsam mit Phosphiten (c) zu verwenden, doch die erzielbare Wirkung in den oben genannten speziellen Formmassen war nicht vorhersehbar. Gegenstand der vorliegenden Erfindung ist dementsprechend die Verwendung einer Formmasse aus

1) 100 Gewichtsteilen eines Polyäthylens, das
1.1) mittels eines Chrom enthaltenden Katalysators hergestellt ist,
1.2) eine Dichte von über 0,935 g/cm³, vorzugsweise von über 0,945, und insbesondere von 0,950 bis 0,960 g/cm³ hat,
1.3) einen Schmelzindex (nach DIN 53 735 bei 190 °C/2,16 kg) von kleiner 0,7 g/10 min aufweist und
1.4) eine Lösungsviskosität (nach DIN 53 728/Blatt 4) von 1 bis 5 cm³/g besitzt,
2) 1 bis 30 Gewichtsteilen eines Polyäthylens, das
2.1) eine Dichte von 0,940 bis 0,968 g/cm³ hat und
2.2) einen Schmelzindex (nach DIN 53 735 bei 190 °C/2,16 kg) von 0,9 bis 20 g/10 min aufweist,
3) 0,05 bis 1, insbesondere 0,1 bis 0,5, Gewichtsteilen eines Tris-(2,4-dialkylphenyl)-phosphits, wobei die Alkylgruppen gleich oder verschieden sind und jeweils 1 bis 9 Kohlenstoffatome enthalten,
4) 0,05 bis 1, insbesondere 0,1 bis 0,5, Gewichtsteilen 1,3,5-Tri-methyl-2,4,6-tris-(3',5'-di-tert-butyl-5'-hydroxy-benzyl)-benzol, sowie
5) — gegebenenfalls — einschlägig üblichen anderen Additiven in einschlägig üblichen Mengen,

zum Herstellen von 10 bis 500, insbesondere 10 bis 80 und vor allem 10 bis 30 μm dicken biaxial verstreckten Folien nach dem Folienblasverfahren mit einem Aufblasverhältnis bis zu 1 : 10 und insbesondere von 1 : 2 bis 1 : 7.

Zur stofflichen Seite des Erfindungsgegenstands ist im einzelnen das Folgende zu sagen :

1) Die einzusetzenden Polyäthylene der Art (1) sind an sich bekannt und im Handel erhältlich, so daß sich nähere Ausführungen zu ihnen erübrigen. Zu bemerken ist jedoch, daß sich zweierlei gezeigt hat :

a) Besonders gut geeignet sind Polyäthylene, die Schmelzindices (nach DIN 53 735 und 190 °C/2,16 kg) von 0,1 bis 0,6 g/10 min aufweisen und Lösungsviskositäten (nach DIN 53 728/Blatt 4) von 1,8 bis 2,6 cm³/g besitzen. Solche Polyäthylene lassen sich z.B. bevorzugt zum Herstellen von Folien für Einwickelzwecke verwenden.

b) Besonders gut geeignet sind auch Polyäthylene, die Schmelzindices (nach DIN 53 735 bei 190 °C/21,6 kg) von 6 bis 20 g/10 min aufweisen und Lösungsviskositäten (nach DIN 53 728/Blatt 4) von 2,7 bis 4,0 cm³/g besitzen. Solche Polyäthylene lassen sich z.B. bevorzugt verwenden zum Herstellen von Folien für Tüten, Tragebeutel, Säcke und Web- oder Klebebänder sowie zum Kaschieren : die Folien haben eine hohe Festigkeit und Schockzähigkeit ; sie eignen sich auch als Schrumpffolien.

2) Auch die einzusetzenden Polyäthylene der Art (2) sind an sich bekannt und im Handel erhältlich, so daß sich zu ihnen ebenfalls nähere Ausführungen erübrigen. Zu bemerken ist hier, daß sich wiederum zweierlei gezeigt hat :

a) Besonders gut geeignet sind Polyäthylene, die einen Schmelzindex (nach DIN 53 735 bei 190 °C/2,16 kg) von 1,0 bis 2,5 g/10 min aufweisen ; diese Polyäthylene werden zweckmäßigerweise eingesetzt in Mengen von 10 bis 25 Gewichtsteilen pro 100 Gewichtsteilen des Polyäthylens der Art (1).

b) Besonders gut geeignet sind auch Polyäthylene, die einen Schmelzindex (nach DIN 53 735 bei 190 °C/2,16 kg) von 5 bis 12 g/10 min aufweisen ; diese Polyäthylene werden zweckmäßigerweise eingesetzt in Mengen von 3 bis 15 Gewichtsteilen pro 100 Gewichtsteilen des Polyäthylens der Art (1).

3) Als Tris-(2,4-dialkylphenyl)-phosphite kommen vornehmlich solche in Betracht, deren Alkylgruppen verzweigt sind ; die Alkylgruppen sind vorzugsweise verzweigte, 3 bis 5 Kohlenstoffatome enthaltende. Besonders gut geeignet ist das Tris-(2,4-di-tert.-butylphenyl)-phosphit.

4) Die vierte Komponente ist 1,3,5-Tri-methyl-3,4,6-tris-(3′,5′-di-tert.-butyl-4′-hydroxy-benzyl)-benzol ; es ist als solches bekannt und im Handel erhältlich, so daß sich insoweit nähere Ausführungen erübrigen.

5) Im Rahmen des Erfindungsgegenstandes können — gewünschtenfalls — übliche andere Additive, also Hilfs- und Zusatzstoffe, in einschlägig üblichen Mengen mitverwendet werden. Zu nennen sind beispielsweise Verarbeitungshilfsmittel, wie insbesondere Metallstearate, etwa Aluminium-, Calcium-, Zink- oder Kaliumstearat (in Mengen von 0,02 bis 0,5 Gewichtsteilen pro 100 Gewichtsteilen Polyäthylen) ; Antioxidantien, wie phenolische Stoffe, etwa Pentaerythrityltetrakis-[3-(3,5-di-tert.-butyl-4-hydroxyphenyl)-propionat] oder Octadecyl-3-(3,5-di-tert.-butyl-4-hydroxyphenyl)-propionat (in Mengen von 0,01 bis 0,2 Gewichtsteilen pro 100 Gewichtsteilen Polyäthylen) ; Antiblockmitteln, wie Siliciumdioxid (in Mengen von 0,05 bis 0,5 Gewichtsteilen pro 100 Gewichtsteilen Polyäthylen) ; ferner Antistatika, Pigmente, Füllstoffe und Nucleierungsmittel.

Das Herstellen der erfindungsgemäß zu verwendenden Formmassen aus ihren Komponenten kann in einschlägig üblichen Mischvorrichtungen in einschlägig üblicher Weise erfolgen ; es ist an sich mit keinen Besonderheiten verbunden und bedarf daher keiner näheren Erläuterung.

Sinngemäß das gleiche gilt für das Herstellen der Folien aus den erfindungsgemäß zu verwendenden Formmassen, denn das Folienblasverfahren als solches ist in der Praxis wohl eingeführt und in der Literatur vielfach beschrieben, z.B. in den Aufsätzen von G. Prall in « Modern Plastics », Band 47 (1970), Heft 5, Seiten 90 bis 92 oder von S. Heimlich, in « Industrieanzeiger », Band 94 (1972), Nr. 97, Seiten 2 332 bis 2 336 oder in dem Buch « Extrudieren von Schlauchfolien », VDI-Verlag GmbH, 1973, insbesondere Seiten 193 bis 230.

Beispiel

Es wird wervendet eine Formmasse aus

1) 100 Gewichtsteilen eines Polyäthylens, das
   1.1) mittels eines Chrom enthaltenden Katalysators hergestellt ist,
   1.2) eine Dichte von 0,956 g/cm³ hat,
   1.3) einen Schmelzindex (nach DIN 53 735 bei 190 °C/21,6 kg) von 9,0 g/10 min aufweist und
   1.4) eine Lösungsviskosität (nach DIN 53 728/Blatt 4) von 3,4 cm³/g besitzt,
2) 10 Gewichtsteilen eines Polyäthylens, das
   2.1) eine Dichte von 0,960 g/cm³ hat und
   2.2) einen Schmelzindex (nach DIN 53 735 bei 190 °C/2,16 kg) von 8 g/10 min aufweist,
3) 0,2 Gewichtsteilen Tris-(2,4-di-tert.-butylphenyl)-phosphit,
4) 0,2 Gewichtsteilen 1,3,5-Tri-methyl-2,4,6-tris-(3′,5′-di-tert.-butyl-4′-hydroxy-benzyl)-benzol sowie
5) 0,4 Gewichtsteilen Calciumstearat.

Aus dieser Formmasse wird mittels einer üblichen Folienblasvorrichtung (Durchmesser der Ringdüse : 100 mm ; Düsenspalt : 0,8 mm) bei einer Massetemperatur von etwa 250 °C ein Schlauch extrudiert und im Verhältnis 1 : 5 aufgeblasen. Die Anzugsgeschwindigkeit wird so gewählt, daß eine 20 µm dicke — biaxial verstreckte — Folie resultiert ; sie weist keinen Schmelzbruch auf und eignet sich gut zum Herstellen von Beuteln sowie Tragetaschen.

**Anspruch**

Verwendung einer Formmasse aus

1) 100 Gewichtsteilen eines Polyäthylens, das
   1.1) mittels eines Chrom enthaltenden Katalysators hergestellt ist,
   1.2) eine Dichte von über 0,935 g/cm³ hat,
   1.3) einen Schmelzindex (nach DIN 53 735 bei 190 °C/2,16 kg) von kleiner 0,7 g/10 min aufweist und
   1.4) eine Lösungsviskosität (nach DIN 53 728/Blatt 4) von 1 bis 5 cm³/g besitzt,
2) 1 bis 30 Gewichtsteilen eines Polyäthylens, das
   2.1) eine Dichte von 0,940 bis 0,968 g/cm³ hat und
   2.2) einen Schmelzindex (nach DIN 53 735 bei 190 °C/2,16 kg) von 0,9 bis 20 g/10 min aufweist,
3) 0,05 bis 1 Gewichtsteilen eines Tris-(2,4-dialkylphenyl)-phosphits, wobei die Alkylgruppen gleich oder verschieden sind und jeweils 1 bis 9 Kohlenstoffatome enthalten,
4) 0,05 bis 1 Gewichtsteilen 1,3,5-Tri-methyl-2,4,6-tris-(3′,5′-di-tert.-butyl-4′-hydroxy-benzyl)-benzol, sowie
5) — gegebenenfalls — einschlägig üblichen anderen Additiven in einschlägig üblichen Mengen,

zum Herstellen von 10 bis 500 µm dicken biaxial verstreckten Folien nach dem Folienblasverfahren mit einem Aufblasverhältnis bis zu 1 : 10.

## Claim

The use of a moulding compound consisting of

1) 100 parts by weight of a polyethylene which

1.1) is produced by means of a chromium-containing catalyst.

1.2) has a density of above 0.935 g/cm³,

1.3) has a melt index (according to DIN 53 735 at 190 °C/2.16 kg) of below 0.7 g/10 min. and

1.4) has a solution viscosity (according to DIN 53 728/sheet 4) of 1 to 5 cm³/g.

2) 1 to 30 parts by weight of a polyethylene which

2.1) has a density of 0.940 to 0.968 g/cm³, and

2.2) has a melt index (according to DIN 53 735 at 190 °C/2.16 kg) of 0.9 to 20 g/10 min.,

3) 0.05 to 1 part by weight of a tris-(2,4-dialkyl-phenyl)-phosphite, the alkyl groups being identical or different and each containing 1 to 9 carbon atoms,

4) 0.05 to 1 part by weight of 1,3,5-tri-methyl-2,4,5-tris-(3',5'-di-tert-butyl-4'-hydroxy-benzyl)-benzene, and

5) — optionally — further customary additives in the usual amounts common to the trade,

for producing 10 to 500 μm thick, biaxially stretched films, by the film blowing process, with a stretch-blow ratio of up to 1 : 10.

## Revendication

Application d'une matière à mouler constituée :

1) de 100 parties en poids d'un polyéthylène qui

1.1) a été préparé au moyen d'un catalyseur contenant du chrome,

1.2) a une masse volumique supérieure à 0,935 g/cm³,

1.3) a un indice de fusion (selon DIN 53 735 à 190 °C/2,16 kg) inférieur à 0,7 g/10 mn et

1.4) a une viscosité en solution (selon DIN 53 728/feuille 4) de 1 à 5 cm³/g,

2) de 1 à 30 parties en poids d'un polyéthylène qui

2.1) a une masse volumique comprise entre 0,940 et 0,968 g/cm³ et

2.2) a un indice de fusion selon DIN 53 735 à 190 °C/2,16 kg) compris entre 0,9 et 20 g/10 mn,

3) de 0,05 à 1 partie en poids d'un phosphite de tris-(dialkyl-2,4 phényle) dont les radicaux alkyles sont identiques ou différents et contiennent chacun de 1 à 9 atomes de carbone,

4) de 0,05 à 1 partie en poids de triméthyl-1,3,5 tris-(di-tert-butyl-3,5 hydroxy-4 benzyl)-2,4,6 benzène, et

5) — éventuellement — d'autres additifs usuels dans le domaine considéré à des doses également usuelles dans le domaine considéré,

pour la fabrication de feuilles biaxialement étirées, de 10 à 500 μm d'épaisseur, par le procédé de soufflage, avec un rapport de soufflage allant jusqu'à 1 : 10.